(19) Europäisches Patentamt
European Patent Office
Office européen des brevets

(11) Veröffentlichungsnummer: **0 019 847**
**B1**

(12) # EUROPÄISCHE PATENTSCHRIFT

(45) Veröffentlichungstag der Patentschrift: **12.05.82**

(51) Int. Cl.³: **G 03 C 1/02**

(21) Anmeldenummer: **80102824.2**

(22) Anmeldetag: **21.05.80**

(54) **Verfahren zur Bildung von Metallsalzen, photographische Materialien und deren Verwendung zur Herstellung photographischer Bilder.**

(30) Priorität: **25.05.79 DE 2921164**

(43) Veröffentlichungstag der Anmeldung:
**10.12.80 Patentblatt 80/25**

(45) Bekanntmachung des Hinweises auf die Patenterteilung:
**12.05.82 Patentblatt 82/19**

(84) Benannte Vertragsstaaten:
**BE CH DE FR GB LI**

(56) Entgegenhaltungen:
**DE-A-1 804 289**
**DE-A-2 107 118**
**FR-A-1 191 491**
**US-A-3 821 002**
**US-D-504 156**

(73) Patentinhaber: **AGFA-GEVAERT Aktiengesellschaft, D-5090 Leverkusen 1 (DE)**

(72) Erfinder: **Teitscheid, Heinz, Schöne Aussicht 2, D-5090 Leverkusen 3 (DE)**
Erfinder: **Saleck, Wilhelm, Dr., Im Birkelshof 3, D-5060 Bergisch-Gladbach 2 (DE)**
Erfinder: **von Rintelen, Harald, Dr., Freudenthaler Weg 35, D-5090 Leverkusen (DE)**

**EP 0 019 847 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Bildung von Metallsalzen, photographische Materialien und deren Verwendung zur Herstellung photographischer Bilder

Die Erfindung betrifft ein Verfahren zur Bildung von Metallsalzen innerhalb vergleichsweise kurzer Zeiträume und insbesondere ein Verfahren zur Bildung von lichtempfindlichen Silbersalzen. Die lichtempfindlichen Silbersalze werden bevorzugt in Gegenwart eines Bindemittels unter Bildung einer Silbersalzemulsion hergestellt. Weiterhin betrifft die Erfindung photographische Materialien sowie ein Verfahren zur Herstellung photographischer Bilder.

Zur Bildung von lichtempfindlichen Silberhalogenidemulsionen ist es bereits bekannt, entsprechende Silbersalze in einem Bindemittel auszufällen. Insbesondere ist es bekannt, Silberhalogenidemulsionen durch Fällen von Silberhalogenid in einem Bindemittel herzustellen, wobei als Bindemittel vorzugsweise Gelatine verwendet wird. Die Fällung des Silberhalogenids kann dadurch erfolgen, daß zu einer Halogenidlösung in Gelatine eine wäßrige Lösung eines Silbersalzes zugefügt wird. Die Größe der erhaltenen Silberhalogenidkörner wird dabei u. a. durch die Temperatur der Lösung, die Einlaufzeit und den Halogenidüberschuß gesteuert. Umgekehrt ist es auch bekannt, zu einer vorgelegten wäßrigen Lösung eines Silbersalzes die wäßrige Lösung eines Halogenids zuzugeben.

Es ist weiter bekannt, die wäßrigen Lösungen eines Silbersalzes und eines Halogenids gleichzeitig in eine Vorlage nach dem sogenannten Doppeleinlaufverfahren einlaufen zu lassen. Geeignete Verfahren dieser Art sind beispielsweise in der britischen Patentschrift 1 027 146 und in der Veröffentlichung von E. MOISAR und S. WAGNER in »Berichte der Bunsengesellschaft für physikalische Chemie«, 67 (1963), Seiten 356 bis 359, beschrieben.

Die Korngröße und die Kornverteilung der Silberhalogenidkörner der erhaltenen Emulsion werden, neben den bereits erwähnten Möglichkeiten der Variation des Einlaufs, vor allem durch die sogenannte Ostwald-Reifung bestimmt. Unter der Ostwald-Reifung wird die Auflösung leichter löslicher Silberhalogenidkörner und anschließende Abscheidung an schwerer löslichen Silberhalogenidkörnern unter der Einwirkung von Silberhalogenidlösungsmitteln verstanden.

Zur Herstellung von Silberhalogenidemulsionen sind auch Verfahren bekannt, Emulsionen unterschiedlicher Korngröße zu mischen und in Gegenwart von Silberhalogenidlösungsmitteln eine Umlösung zu erwirken. Eine Voraussetzung für derartige Verfahren ist, daß die bei der Umlösung verwendeten Silberhalogenidkristalle unterschiedliche Löslichkeit aufweisen. Derartige Verfahren sind beispielsweise bekannt aus den US-Patentschriften 2 146 938, 3 206 313, 3 317 322, der deutschen Auslegeschrift 1 207 791 und dem Referat von D. MARKOCKI und W. ROMER in »Korpuluskar Photographie«, IV (1963), Seiten 149 ff.

Die bekannten Verfahren zur Herstellung von lichtempfindlichen Silbersalzen, insbesondere von Silberhalogeniden, weisen aber etliche Nachteile auf. Im allgemeinen ist beispielsweise bei der Fällung von Silberhalogeniden die Anzahl der zu Fällungsbeginn entstandenen Silberhalogenidkeime größer als die Anzahl der Silberhalogenidkristalle, die mit der vorgegebenen Menge an Ausgangsmaterialien hergestellt werden sollen. Im allgemeinen würden zu kleine und damit zu unempfindliche Silberhalogenidkristalle erhalten werden, wenn man alle entstehenden Silberhalogenidkeime bei vorgegebener Menge an Ausgangsmaterialien weiterwachsen ließe. Zwar sind verschiedene Verfahren bekannt, die Anzahl der bei der Fällung zunächst entstehenden Silberhalogenidkeime nachträglich zu verringern; verwiesen sei beispielsweise auf die deutsche Offenlegungsschrift 2 107 118 und die britische Patentschrift 1 170 648, demgemäß eine Silberhalogenidemulsion gefällt wird, von dieser Fällung ein kleiner Teil abgetrennt und in Gelatinelösung dispergiert wird, wobei man anschließend auf diesen Teil mittels Doppeleinlauf weiteres Silberhalogenid aufwachsen läßt, bis die Kristalle die gewünschte Größe haben.

Den bekannten Verfahren gemeinsam ist der Nachteil, daß zunächst mehr Silberhalogenidkeime pro Mol Silber entstehen als erwünscht und man anschließend spezielle Maßnahmen ergreifen muß, um die Anzahl der Silberhalogenidkeime in erforderlichem Umfang zu verringern. Weiterhin sind die bekannten Verfahren zur Bildung von lichtempfindlichen Silbersalzen relativ zeitaufwendig. Deshalb sind bereits verschiedene Verfahren vorgeschlagen worden, um die Ausfällzeit durch allmähliche Erhöhung der Zugabegeschwindigkeit abzukürzen. Verwiesen sei beispielsweise auf die deutschen Offenlegungsschriften 1 804 289 und 2 107 118. Nachteilig an diesen bekannten Verfahren ist jedoch, daß die Steuerung der Zulaufgeschwindigkeit entweder schwer oder nur mit einem aufwendigen Regelmechanismus vorgenommen werden kann. Verwiesen sei beispielsweise auf die US-Patentschrift 3 821 002.

Weiterhin ist bekannt, daß bei der Herstellung von Silberhalogenidkörnchen mit einer engen Korngrößenverteilung, d. h. mit einer praktisch gleichen Durchschnittsgröße, zahlreiche Schwierigkeiten auftreten. So besteht die Gefahr, daß sich die zunächst ausgefällten Silberhalogenidkörner agglomerieren oder daß es zur Bildung neuer Keime kommt.

Es ist somit eine Aufgabe der Erfindung, ein verbessertes Verfahren zur Herstellung von Metallsalzen, insbesondere von lichtempfindlichen Silbersalzen, und ganz speziell von Silberhalogeniden aufzufinden, das die Nachteile der bekannten Verfahren vermeidet. Insbesondere ist es Aufgabe der Erfindung, ein Verfahren aufzufinden, bei dem kurze Fällungszeiten eingehalten werden können, das Arbeiten in konzentrierten Lösungen möglich ist, Neukeimbildungen im wesentlichen oder ganz

ausgeschlossen sind und bei Verwendung von Silberhalogenidlösungsmitteln nur ein geringer Bedarf an diesen besteht.

Es wurde nun ein verbessertes Verfahren zur Bildung von schwerlöslichen Metallsalzen, insbesondere von lichtempfindlichen Silbersalzen und ganz speziell von Silberhalogeniden gefunden, bei dem in einem Reaktionsgefäß (RG) wenigstens eine Lösung A, die wenigstens ein Kation des Metallsalzes enthält, mit wenigstens einer Lösung B, die wenigstens ein Anion des Metallsalzes enthält, vermischt wird durch Zulauf wenigstens einer dieser Lösungen in das Reaktionsgefäß unter Verwendung der Lösungen A und B. In einer Ausführungsform der Erfindung sind A und/oder B wäßrige Lösungen.

Erfindungsgemäß erfolgt dieser Zulauf während der gesamten Fällung oder wenigstens eine Zeitlang so, daß sich die Konzentration des auszufällenden Ions in der zulaufenden Lösung kontinuierlich ändert.

In einer bevorzugten Ausführungsform I fließt aus einem Vorratsbehälter $VB_1$, der die Lösung wenigstens eines der auszufällenden Kationen oder Anionen in der Konzentration $c_1$ enthält, diese Lösung in einen weiteren Vorratsbehälter $VB_2$. $VB_2$ enthält eine Lösung des aus $VB_1$ in der Konzentration $c_1$ zufließenden Ions, aber mit der Anfangskonzentration $c_2$. Erst aus $VB_2$ erfolgt der Zufluß in das Reaktionsgefäß RG. Die Konzentration $c_1$ ist von der Konzentration $c_2$ verschieden. Im Grenzfall kann entweder $c_1$ oder $c_2$ den Wert Null annehmen. Die Anfangskonzentration ist dabei die Konzentration vor Beginn des Zulaufs aus $VB_1$ in $VB_2$.

Diese Art des Einlaufs aus einem ersten Vorratsbehälter in einen zweiten Vorratsbehälter und — gegebenenfalls über weitere Stufen — in das Reaktionsgefäß wird im folgenden als Kaskadeneinlauf bezeichnet.

In einer Ausführungsform der Erfindung erfolgt die Zugabe der einen Lösung (A oder B) über diese Kaskade, während die andere Lösung in bekannter Weise ohne Kaskade über einen üblichen Zulauf Z zugegeben (vgl. Fig. 1) bzw. vorgelegt wird. In einer anderen Ausführungsform werden beide Lösungen (A und B) jeweils über eine Kaskade zugegeben (vgl. Fig. 2).

In einer anderen Ausführungsform II fließen wenigstens eine Zeitlang aus wenigstens zwei Vorratsbehältern, in denen entweder Lösungen der Anionen (Lösung B) oder der Kationen (Lösung A) des auszufällenden Salzes in unterschiedlichen Konzentrationen $c'_1$ und $c'_2$ enthalten sind, diese Lösungen mit den Volumenströmen $v'_1$ und $v'_2$ in eine Regelvorrichtung R, in der das Verhältnis von $v'_1$ zu $v'_2$ kontinuierlich variiert wird, und aus dieser Regelvorrichtung, gegebenenfalls über zusätzliche Mischer oder Dosiervorrichtungen, mit dem Gesamtvolumenstrom $v'_g$, dessen Konzentration $c'$ sich kontinuierlich ändert, in das Reaktionsgefäß, in welchem die Fällung des schwerlöslichen Salzes durch Reaktion mit der anderen Lösung (A bzw. B) stattfindet. Die Konzentration $c'_1$ ist von der Konzentration $c'_2$ verschieden; $c'_1$ oder $c'_2$ kann den Wert Null annehmen. Unter »Volumenstrom« wird die Menge der jeweiligen Lösung verstanden, die in der Zeiteinheit fließt. In einer derartigen Ausführungsform erfolgt die Zugabe der einen Lösung (A oder B) in dieser Art, während die andere Lösung (B oder A) über einen üblichen Zulauf Z erfolgt oder indem die andere Lösung vorgelegt wird. Es können aber auch beide Lösungen getrennt voneinander in dieser Art zugegeben werden.

Ausführungsform II sei anhand der Fig. 5 erläutert, ohne daß dadurch eine Einschränkung erfolgen soll: In den Kesseln $VB'_1$ und $VB'_2$ der Fig. 5 befinden sich Lösungen verschiedener Konzentration. Die Abflußrohre vereinigen sich in einer Regelvorrichtung R, die eine kontinuierliche Mischung sowohl ansteigend als auch abnehmend, linear oder exponentiell durch einfachste Steuerungsmechanismen zuläßt. Als eine bevorzugte Ausführungsform befindet sich unter der Regelvorrichtung noch eine Dosiereinrichtung. Zur besseren Durchmischung der Lösungen können vor oder hinter der Dosiereinrichtung statische Mischer eingebaut sein. Will man z. B. eine in der Konzentration linear ansteigende Stoffzufuhr vorsehen, wird zuerst 100% aus dem Gefäß $VB'_1$ mit einer niedrigen Konzentration ausfließen. Die Regelvorrichtung bewirkt, daß immer mehr konzentrierte Lösung aus $VB'_2$ zufließt und dadurch die Stoffzufuhr erhöht wird, ohne im wesentlichen die in der Zeiteinheit zulaufende Flüssigkeitsmenge zu ändern. Eine Änderung der Zuflußrate als zusätzlichen Parameter für die Reaktionssteuerung läßt sich relativ einfach verwirklichen. Soll durch Zulauf von zwei Reaktionspartnern ein schwerlösliches Salz ausgefällt werden, so kann diese Vorrichtung sowohl für die Anionen als auch für die Kationenseite angewandt werden, wobei es sich anbietet, die beiden Mischhähne synchron durch ein Steuerorgan zu regeln.

In einer ganz bevorzugten Ausführungsform der Erfindung erhöht sich die Konzentration der zulaufenden Lösung wenigstens eine Zeitlang kontinuierlich. Insbesondere wird dabei so verfahren, daß zunächst in an sich bekannter Weise Keime des auszufällenden Salzes im Reaktionsgefäß durch Zusammengeben entsprechender Ausgangslösungen erzeugt werden und nach der Keimbildung — in der Wachstumsphase — die Konzentration der zulaufenden Lösung erhöht wird. Auf diese Weise wird erreicht, daß die Diffusionswege der Fällungskomponenten zum bereits vorhandenen Korn möglichst konstant bleiben, eine Neukeimbildung praktisch unterbleibt und die zufließende Fällungskomponente im wesentlichen für das Kristallwachstum verbraucht wird.

Gegen Ende der Wachstumsphase kann es dagegen angebracht sein, die Konzentration kontinuierlich zu verringern. In einer bevorzugten Ausführungsform der Erfindung ist das zu bildende Metallsalz ein Silberhalogenid, Lösung A die wäßrige Lösung eines Silbersalzes, das in Wasser

leichter löslich ist als das zu bildende Salz, und Lösung B die Lösung eines in Wasser leichtlöslichen Halogenids.

Ein weiterer Gegenstand der Erfindung sind photographische Materialien mit einem Schichtträger und wenigstens einer darauf aufgetragenen lichtempfindlichen Silberhalogenidemulsionsschicht mit einem erfindungsgemäß hergestellten Salz und gegebenenfalls weiteren Schichten.

Weiterhin eignen sich derartige Materialien für die Herstellung photographischer Bilder durch bildmäßige Belichtung und Entwicklung.

In einer bevorzugten Ausführungsform der Erfindung wird der Kaskadeneinlauf so vorgenommen, daß zwei Vorratsbehälter übereinander angeordnet werden, so daß der Inhalt des oberen Vorratsbehälters mit im wesentlichen konstanter Geschwindigkeit in den unteren Vorratsbehälter einfließt, während der Inhalt des unteren Vorratsbehälters gleichzeitig mit im wesentlichen konstanter Geschwindigkeit in das Reaktionsgefäß einläuft.

Erfindungsgemäß können sowohl nach Ausführungsform I (Kaskade) als auch nach Ausführungsform II in einfacher Weise einfache Salze hergestellt werden, die nur Kationen eines Typs (z. B. $Ag^+$) und nur Anionen eines Typs (z. B. Br′) enthalten. Liegt z. B. bei der Ausführungsform I die Konzentration $c_1$ der Lösung im Vorratsbehälter $VB_1$ über der Konzentration $c_2$ der Lösung im Behälter $VB_2$, erzielt man einen Einlauf mit konstanter Geschwindigkeit, aber ansteigender Stoffzufuhr. Kehrt man das Verhältnis der beiden Konzentrationen zueinander um, dann wird die Stoffzufuhr während des zeitlichen Ablaufs stetig vermindert, wobei aber ebenfalls im wesentlichen eine konstante Geschwindigkeit des Zulaufs erreicht wird. Im Grenzfall kann dabei entweder die Konzentration $c_1$ oder die Konzentration $c_2$ den Wert Null annehmen; in diesen Fällen ist also entweder in $VB_1$ oder $VB_2$ das betreffende auszufällende Ion nicht enthalten, wohl aber das Lösungsmittel, z. B. Wasser.

Die erfindungsgemäß hergestellten Metallsalze können aber nicht nur einfache, sondern auch Doppelsalze oder Gemische von einfachen Salzen sein. Beispielsweise können nicht nur Silberhalogenide mit einem einheitlichen Halogenid, z. B. Chlorid oder Bromid, sondern auch mit mehreren Halogeniden hergestellt werden, wobei die Halogenide auch Silberiodid, insbesondere bis zu 10 Mol-%, enthalten können.

Erfindungsgemäß können auch Emulsionen mit geschichtetem Kornaufbau hergestellt werden. Derartige Emulsionen sind beispielsweise beschrieben in der US-A-3 206 313, US-A-3 317 322, DE-A-2 224 837, DE-B-1 169 290 und der DE-A-2 308 239.

Weiterhin können Konvertemulsionen, z. B. des in der US-A-2 592 250 angegebenen Typs, hergestellt werden.

Halogenidgemische können erfindungsgemäß z. B. hergestellt werden, indem in den Halogenidvorratsbehältern nicht nur ein, sondern wenigstens zwei Halogenide eingesetzt werden, gegebenenfalls in unterschiedlichen Vorratsbehältern. Selbstverständlich können anstelle von Silberhalogeniden auch Silberpseudohalogenide, insbesondere Silberthiocyanat, ausgefällt werden.

Zur Herstellung von Silberhalogenidgemischen kann z. B. für die Halogenidzugabe eine Kaskade mit den Vorratsbehältern $VB_1$ und $VB_2$ verwendet werden. Hierbei können alle auszufällenden Halogenide in allen Vorratsbehältern enthalten sein mit der Maßgabe, daß die Konzentration wenigstens eines Halogenids in den Vorratsbehältern unterschiedlich groß ist.

In einer anderen Ausführungsform kann aber auch so verfahren werden, daß beispielsweise ein Halogenid (im folgenden $X_1$) nur in $VB_1$ und — vor Beginn des Zulaufs aus $VB_1$ in $VB_2$ — wenigstens ein anderes Halogenid (im folgenden $X_2$) nur in $VB_2$ enthalten ist.

In diesem Fall liegen — vor Beginn des Zulaufs aus $VB_1$ in $VB_2$ — $X_1$ in $VB_2$ und $X_2$ in $VB_1$ in der Konzentration 0 vor.

Selbstverständlich kann in jedem Fall zusätzlich wenigstens eines der auszufällenden Kationen oder Anionen im Reaktionsgefäß vorgelegt werden.

Somit wird in überaus einfacher Weise ohne komplizierten Regelmechanismus erreicht, daß das zulaufende Volumen in der Zeiteinheit gleich gehalten werden kann, gleichzeitig aber, ebenfalls ohne komplizierten Regelmechanismus, die zugesetzte Menge und/oder Art an auszufällenden Anionen bzw. Kationen über die Veränderung der Konzentration beeinflußt wird.

Eine derartige Regelung der Stoffzufuhr ist für die Herstellung bestimmter Emulsionen außerordentlich wünschenswert. Besonders für monodisperse Emulsionen bietet sich eine solche Verfahrensweise an. Da auf eine gleiche Anzahl von Keimkristallen das auszufällende Silberhalogenid aufwachsen soll, wird in einer bevorzugten Ausführungsform der Erfindung auch die Stoffzufuhr laufend erhöht, da die Oberfläche der Kristalle ebenfalls zunimmt. Die Erhöhung der Stoffzufuhr wird beim Kaskadeneinlauf dadurch erreicht, daß die Konzentration $c_1$ größer ist als die Konzentration $c_2$.

Das erfindungsgemäße Verfahren zeichnet sich aus durch eine einfach zu handhabende Automatisierung, da der Volumenstrom stets gleich und die Stoffzufuhr in weiten Grenzen variabel gehalten werden kann. Gegebenenfalls kann aber auch der Volumenstrom durch geeignete Vorrichtungen zusätzlich variiert werden. Es bereitet keinerlei Schwierigkeiten, auch extreme Fällbedingungen bezüglich Temperatur, pH und pAg einzuhalten. Überraschenderweise wird durch das erfindungsgemäße Verfahren eine deutliche Verkürzung der Fällzeiten und ein Arbeiten mit konzentrierteren Ansätzen als bei den üblichen Verfahren erreicht. Weiterhin kann die Neukeimbildung unterdrückt werden und es wird eine erhöhte Silberausbeute erzielt.

Die Zugabe einer Lösung über den Zulauf Z kann in an sich bekannter Weise gesteuert werden, z. B. in Abhängigkeit vom pAg-Wert.

Grundsätzlich können also nach dem erfindungsgemäßen Verfahren Metallsalze praktisch jeden Typs ausgefällt werden. Neben den bereits erwähnten Metallsalzen beispielsweise also auch Bariumsulfat, Bismutsulfat, Kalziumcarbonat, Kalziumsulfat, Bleicarbonat, Bleiiodid und Bleisulfat.

Nach dem erfindungsgemäßen Verfahren können sowohl Metallsalze mit enger als auch mit relativ breiter Korngrößenverteilung ausgefällt werden. Insbesondere können nach dem erfindungsgemäßen Verfahren sowohl homodisperse als auch heterodisperse Silberhalogenidemulsionen hergestellt werden.

Unter homodispersen Emulsionen versteht man dabei solche mit enger Korngrößenverteilung; vorzugsweise haben dabei wenigstens 95% der Silberhalogenidkörner einen Durchmesser, der nicht mehr als 40%, oder vorzugsweise nicht mehr als 30%, vom mittleren Korndurchmesser abweicht. Die Silberhalogenidkörner können eine beliebige der bekannten Formen, z. B. kubisch, oktaedrisch oder auch eine tetradekaedrische Mischform aufweisen.

Unter heterodispersen Emulsionen sind insbesondere solche zu verstehen, bei denen mindestens 10%, vorzugsweise aber mindestens 20%, der Silberhalogenidkörner einen Durchmesser haben, der zumindest um 40% vom mittleren Korndurchmesser abweicht. Die Silberhalogenidkörner derartiger Emulsionen haben im allgemeinen eine irreguläre Form.

Der Absolutwert der mittleren Korngröße der erfindungsgemäß hergestellten Metallsalze, insbesondere der erfindungsgemäß hergestellten Silberhalogenidemulsionen, kann innerhalb weiter Grenzen schwanken. Beispielsweise können sowohl feinkörnige Silberhalogenidemulsionen mit einem mittleren Durchmesser von unter 0,5 µm, vorzugsweise unter 0,3 µm, als auch grobkörnige mit mittleren Korndurchmessern zwischen 0,5 und 4 µm hergestellt werden.

Sollen lichtempfindliche Silbersalzemulsionen, beispielsweise Silberhalogenidemulsionen, hergestellt werden, so sind als Schutzkolloid bzw. Bindemittel die üblichen hydrophilen filmbildenden Mittel geeignet, z. B. Proteine, insbesondere Gelatine, Alginsäure oder deren Derivate wie Ester, Amide oder Salze, Cellulose-Derivate wie Carboxymethylcellulose und Cellulosesulfate, Stärke oder deren Derivate oder hydrophile synthetische Bindemittel wie Polyvinylalkohol, teilweise verseiftes Polyvinylacetat und Polyvinylpyrrolidon. Die Schichten können im Gemisch mit den hydrophilen Bindemitteln auch andere synthetische Bindemittel in gelöster oder dispergierter Form enthalten, wie Homo- oder Copolymerisate von Acryl- oder Methacrylsäure oder deren Derivaten wie Estern, Amiden oder Nitrilen, ferner Vinylpolymerisate wie Vinylester oder Vinylether.

Erfindungsgemäß können grundsätzlich Emulsionen für die verschiedensten photographischen Materialien hergestellt werden wie z. B. negativarbeitende Emulsionen mit hoher Oberflächenempfindlichkeit, negativarbeitende Emulsionen mit hoher Innenempfindlichkeit, direkt-positiv-arbeitende Emulsionen, die oberflächlich verschleiert oder oberflächlich unverschleiert sein können, print-out-Emulsionen, Umkehremulsionen, Emulsionen für Schwarz/Weiß- und für Colormaterialien, Emulsionen mit definierter Kornverteilung und Halogenidtopographie, insbesondere mit definiertem Halogenid-, insbesondere Iodidgradienten.

Die erfindungsgemäß hergestellten Silberhalogenidemulsionen können aus reinen Silberhalogeniden sowie aus Gemischen verschiedener Silberhalogenide bestehen. Beispielsweise können die Silberhalogenidkörner der Emulsionen aus Silberchlorid, Silberbromid, Silberiodid, Silberchloridbromid, Silberchloridiodid, Silberbromidiodid und Silberchloridbromidiodid bestehen.

Die erfindungsgemäß hergestellten Silberhalogenidemulsionen können zur Entfernung der wasserlöslichen Salze entweder in bekannter Weise erstarrt, genudelt und gewässert werden oder auch mit einem Koagulierungsmittel koaguliert und anschließend gewaschen werden, wie es beispielsweise aus der deutschen Offenlegungsschrift 2 614 862 bekannt ist.

Erfindungsgemäß hergestellte Silberhalogenidemulsionen sind weiterhin geeignet für das Silberfarbbleichverfahren, insbesondere aber auch für die sogenannten Color-Sofortbild-Verfahren bzw. Farbübertragungsverfahren. Bei diesen Verfahren diffundieren die Farbstoffe für die Teilfarbbilder in eine Bildempfangsschicht, wo sie fest verankert werden oder die Farbkuppler diffundieren in die Bildempfangsschicht, wo sie nach üblicher farbgebender Entwicklung zu dem Bildfarbstoff umgesetzt werden. Das lichtempfindliche Material enthält dabei im allgemeinen drei lichtempfindliche Emulsionsschichten, wobei jeder dieser Schichten ein farbgebendes System zugeordnet ist. Unter farbgebendem System wird dabei eine in der jeweiligen Schicht diffusionsfest eingelagerte Verbindung verstanden, die einen Farbstoff oder ein Farbstoffvorprodukt darstellt und die bei der Entwicklung in Gegenwart der alkalischen Verarbeitungsmasse unter der Einwirkung von bildmäßig entstehenden Oxidationsprodukten von photographischen Entwicklern diffundierende, vorzugsweise Säuregruppen enthaltende Farbstoffe abspaltet. Hierfür stehen die verschiedensten chemischen Verbindungen zur Verfügung. Besonders geeignet sind beispielsweise diffusionsfeste farbgebende Substanzen gemäß der US-Patentschrift 3 628 952. Diese Verbindungen spalten bei der Reaktion mit Oxidationsprodukten von Schwarz-Weiß- oder Farbentwicklern diffusionsfähige Farbstoffe ab. Eine weitere brauchbare Verbindungsklasse ist in der deutschen Patentschrift 1 095 115 beschrieben. Die hier genannten Verbindungen ergeben bei der Reaktion mit oxidiertem Farbentwickler diffusionsfähige Farbstoffe, die im allgemeinen zur Klasse der Azomethinfarbstoffe

gehören. Ein weiteres brauchbares farbgebendes System ist in den US-Patentschriften 3 443 939 und 3 443 940 beschrieben. Bei diesem System werden unter der Einwirkung von oxidierten Entwicklersubstanzen unter Ringschlußbildung diffusionsfähige Farbstoffe abgespalten.

Farbübertragungsverfahren und in solchen Verfahren verwendete Kuppler, die im Rahmen der vorliegenden Erfindung angewendet werden können, sind ferner in den US-Patentschriften 2 983 606, 3 087 817, 3 185 567, 3 227 550, 3 227 551, 3 227 552, 3 227 554, 3 253 915, 3 415 644, 3 415 645 und 3 415 646 beschrieben.

Die für solche Color-Sofortbild-Verfahren verwendeten lichtempfindlichen Materialien besitzen im allgemeinen folgenden Aufbau:

Blauempfindliche Silberhalogenidemulsionsschicht,
Schicht mit Gelbfarbstoff abgebendem System,
Trennschicht,
grünsensibilisierte Silberhalogenidemulsionsschicht,
Schicht mit Purpurfarbstoff abgebendem System,
Trennschicht,
rotsensibilisierte Silberhalogenidemulsionsschicht,
Schicht mit Blaugrünfarbstoff abgebendem System.

Apparative Möglichkeiten für die Durchführung des erfindungsgemäßen Verfahrens sind in den anliegenden Fig. 1 und 2 schematisch wiedergegeben. In diesen Figuren bedeutet $VB_1$ den ersten Vorratsbehälter, $VB_2$ den zweiten Vorratsbehälter und RG das Reaktionsgefäß. Wie aus den Zeichnungen ersichtlich, ist $VB_1$ mit $VB_2$ über ein Zulaufrohr verbunden und über ein weiteres Zulaufrohr ist $VB_2$ mit RG verbunden. In den Vorratsbehältern und im Reaktionsgefäß werden ggf. geeignete Rührvorrichtungen angeordnet.

Die in Fig. 1 skizzierte Vorrichtung wird verwendet, wenn nur eine der Lösungen A oder B nach Art des Kaskadeneinlaufs in das Reaktionsgefäß gegeben wird, während die andere Lösung über den Zulauf Z zugegeben werden kann.

Die Apparatur gemäß Fig. 2 wird verwendet, wenn sowohl die Lösung A als auch die Lösung B nach Art des Kaskadeneinlaufs zugegeben wird. Selbstverständlich können beliebig viele weitere Vorratsbehälter angeschlossen sein. Sinngemäß gilt dies selbstverständlich auch für eine Vorrichtung gemäß Ausführungsform II, speziell gemäß Fig. 5.

Erfindungsgemäß kann die Fällung von Silberhalogeniden im Reaktionsgefäß in Anwesenheit geeigneter Silberhalogenidlösungsmittel erfolgen. Als Silberhalogenidlösungsmittel sind beispielsweise geeignet: Halogenide, vorzugsweise Alkali- und Ammoniumhalogenide, insbesondere Bromide und Chloride; Ammoniak; Thiocyanate, insbesondere Alkali- oder Ammoniumthiocyanat; Sulfite, insbesondere Alkali- und Ammoniumsulfite; Thiosulfat; organische Amine; Thioether und Imidazol-Derivate. In einer bevorzugten Ausführungsform können organische Thioether verwendet werden, wie sie beispielsweise beschrieben sind in den US-Patentschriften 3 271 157, 3 507 657, 3 531 289 und 3 574 628. Die Silberhalogenidlösungsmittel können sowohl über den Vorratsbehälter in das Reaktionsgefäß zugegeben werden als auch von vornherein im Reaktionsgefäß vorgelegt werden.

Erfindungsgemäß hergestellte Silberhalogenidemulsionen können in bekannter Weise weiterverarbeitet werden: erfindungsgemäß hergestellte Silberhalogenidemulsionen können chemisch sensibilisiert werden, z. B. durch Zusatz schwefelhaltiger Verbindungen bei der chemischen Reifung, beispielsweise Allylisothiocyanat, Allylthioharnstoff und Natriumthiosulfat.

Als chemische Sensibilisatoren können ferner auch Reduktionsmittel, z. B. die in den belgischen Patentschriften 493 464 oder 568 687 beschriebenen Zinnverbindungen, ferner Polyamine wie Diäthylentriamin oder Aminomethylsulfinsäure-Derivate, z. B. gemäß der belgischen Patentschrift 547 323, verwendet werden.

Geeignet als chemische Sensibilisatoren sind auch Edelmetalle bzw. Edelmetallverbindungen wie Gold, Platin, Palladium, Iridium, Ruthenium oder Rhodium. Diese Methode der chemischen Sensibilisierung ist in dem Artikel von R. Koslowsky, Z. Wiss. Phot. 46, 65–72 (1951), beschrieben.

Es ist ferner möglich, die Emulsionen mit Polyalkylenoxid-Derivaten zu sensibilisieren, z. B. mit Polyäthylenoxid eines Molekulargewichts zwischen 1000 und 20 000, ferner mit Kondensationsprodukten von Alkylenoxiden und aliphatischen Alkoholen, Glykolen, cyclischen Dehydratisierungsprodukten von Hexitolen, mit alkylsubstituierten Phenolen, aliphatischen Carbonsäuren, aliphatischen Aminen, aliphatischen Diaminen und Amiden. Die Kondensationsprodukte haben ein Molekulargewicht von mindestens 700, vorzugsweise von mehr als 1000. Zur Erzielung besonderer Effekte kann man diese Sensibilisatoren selbstverständlich kombiniert verwenden, wie in der belgischen Patentschrift 537 278 und in der britischen Patentschrift 727 982 beschrieben.

Die Emulsionen können auch optisch sensibilisiert sein, z. B. mit den üblichen Polymethinfarbstoffen wie Neutrocyanine, basischen oder sauren Carbocyaninen, Rhodacyaninen, Hemicyaninen, Styrylfarbstoffen und Oxonolen.

Derartige Sensibilisatoren sind in dem Werk von F. M. Hamer »The Cyanine Dyes and related Compounds«, 1964, Interscience Publishers, John Wiley and Sons, beschrieben.

Die Emulsionen können die üblichen Stabilisatoren enthalten, wie z. B. homöopolare oder salzartige Verbindungen des Quecksilbers mit aromatischen oder heterocyclischen Ringen wie Mercaptotriazole, einfache Quecksilbersalze, Sulfoniumquecksilberdoppelsalze und andere Quecksilberverbindungen. Als Stabilisatoren sind ferner geeignet Azaindene, vorzugsweise Tetra- oder Pentaazaindene, insbesondere solche, die mit Hydroxyl- oder Aminogruppen substituiert sind. Derartige Verbindungen sind in dem Artikel von Birr, Z. Wiss. Phot. 47 (1952), 2—58, beschrieben. Weitere geeignete Stabilisatoren sind u. a. heterocyclische Mercaptoverbindungen, z. B. Phenylmercaptotetrazol, quaternäre Benzthiazol-Derivate und Benzotriazol.

Die Emulsionen können in der üblichen Weise gehärtet sein, beispielsweise mit Formaldehyd oder halogensubstituierten Aldehyden, die eine Carboxylgruppe enthalten wie Mucobromsäure, Diketonen, Methansulfonsäureester und Dialdehyden.

Weiterhin können die photographischen Schichten mit Härtern des Epoxityps, des heterocyclischen Äthylenimins oder des Acryloyltyps gehärtet werden. Beispiele derartiger Härter sind z. B. in der deutschen Offenlegungsschrift 2 263 602 oder in der britischen Patentschrift 1 266 655 beschrieben. Weiterhin ist es auch möglich, die Schichten gemäß dem Verfahren der deutschen Offenlegungsschrift 2 218 009 zu härten, um farbphotographische Materialien zu erzielen, die für eine Hochtemperaturverarbeitung geeignet sind.

Es ist ferner möglich, die photographischen Schichten bzw. die farbphotographischen Mehrschichtenmaterialien mit Härtern der Diazin-, Triazin- oder 1,2-Dihydrochinolin-Reihe zu härten, wie in den britischen Patentschriften 1 193 290, 1 251 091, 1 306 544, 1 266 655, der französischen Patentschrift 7 102 716 oder der deutschen Offenlegungsschrift 2 332 317 beschrieben ist. Beispiele derartiger Härter sind alkyl- oder arylsulfonylgruppenhaltige Diazin-Derivate, Derivate von hydrierten Diazinen oder Triazinen, wie z. B. 1,3,5-Hexahydrotriazin, fluorsubstituierte Diazin-Derivate, wie z. B. Fluorpyrimidin, Ester von 2-substituierten 1,2-Dihydrochinolin- oder 1,2-Dihydroisochinolin-N-carbonsäuren. Brauchbar sind weiterhin Vinylsulfonsäurehärter, Carbodiimid- oder Carbamoylhärter, wie z. B. in den deutschen Offenlegungsschriften 2 263 602, 2 225 230 und 1 808 685, der französischen Patentschrift 1 491 807, der deutschen Patentschrift 872 153 und der DDR-Patentschrift 7 218 beschrieben. Weitere brauchbare Härter sind beispielsweise in der britischen Patentschrift 1 268 550 beschrieben.

Die vorliegende Erfindung kann sowohl für die Herstellung schwarz-weißer als auch farbiger photographischer Bilder angewendet werden. Farbige photographische Bilder können z. B. nach dem bekannten Prinzip der chromogenen Entwicklung in Anwesenheit von Farbkupplern, die mit dem Oxidationsprodukt von farbgebenden p-Phenylendiamin-Entwicklern unter Bildung von Farbstoffen reagieren, hergestellt werden.

Die Farbkuppler können beispielsweise dem Farbentwickler nach dem Prinzip des sogenannten Einentwicklungsverfahrens zugesetzt werden. In einer bevorzugten Ausführungsform enthält das photographische Material selbst die üblichen Farbkuppler, die in der Regel den Silberhalogenidschichten einverleibt sind. So kann die rotempfindliche Schicht beispielsweise einen nicht-diffundierenden Farbkuppler zur Erzeugung des blaugrünen Teilfarbenbildes enthalten, in der Regel einen Kuppler vom Phenol- oder $\alpha$-Naphtholtyp. Die grünempfindliche Schicht kann beispielsweise mindestens einen nicht-diffundierenden Farbkuppler zur Erzeugung des purpurnen Teilfarbenbildes enthalten, wobei üblicherweise Farbkuppler vom Typ des 5-Pyrazolons oder des Imidazolons Verwendung finden. Die blauempfindliche Schicht kann beispielsweise einen nicht-diffundierenden Farbkuppler zur Erzeugung des gelben Teilfarbenbildes, in der Regel einen Farbkuppler mit einer offenkettigen Ketomethylengruppierung enthalten. Farbkuppler dieser Art sind in großer Zahl bekannt und in einer Vielzahl von Patentschriften beschrieben. Beispielhaft sei hier auf die Veröffentlichung »Farbkuppler« von W. Pelz in »Mitteilungen aus den Forschungslaboratorien der Agfa, Leverkusen/München«, Band III (1961) und K. Venkataraman in »The Chemistry of Synthetic Dyes«, Vol. 4, 341—387, Academic Press, 1971, hingewiesen.

Als weitere nicht-diffundierende Farbkuppler können 2-Äquivalentkuppler verwendet werden; diese enthalten in der Kupplungsstelle einen abspaltbaren Substituenten, so daß sie zur Farbbildung nur zwei Äquivalente Silberhalogenid benötigen im Unterschied zu den üblichen 4-Äquivalentkupplern. Zu den einsetzbaren 2-Äquivalentkupplern gehören beispielsweise die bekannten DIR-Kuppler, bei denen der abspaltbare Rest nach Reaktion mit Farbentwickleroxidationsprodukten als diffundierender Entwicklungsinhibitor in Freiheit gesetzt wird. Weiterhin können zur Verbesserung der Eigenschaften des photographischen Materials die sogenannten Weißkuppler eingesetzt werden.

Die nicht-diffundierenden Farbkuppler und farbgebenden Verbindungen werden den lichtempfindlichen Silberhalogenidemulsionen oder sonstigen Gießlösungen nach üblichen bekannten Methoden zugesetzt. Wenn es sich um wasser- oder alkalilösliche Verbindungen handelt, können sie den Emulsionen in Form von wäßrigen Lösungen, gegebenenfalls unter Zusatz von mit Wasser mischbaren organischen Lösungsmitteln wie Äthanol, Aceton oder Dimethylformamid, zugesetzt werden. Soweit es sich bei den nicht-diffundierenden Farbkupplern und farbgebenden Verbindungen um wasser- bzw. alkaliunlösliche Verbindungen handelt, können sie in bekannter Weise emulgiert werden, z. B. indem eine Lösung dieser Verbindungen in einem niedrigsiedenden organischen Lösungsmittel direkt mit der Silberhalogenidemulsion oder zunächst mit einer wäßrigen Gelatinelösung vermischt wird, worauf das

organische Lösungsmittel in üblicher Weise entfernt wird. Ein so erhaltenes Gelatineemulgat der jeweiligen Verbindung wird anschließend mit der Silberhalogenidemulsion vermischt. Gegebenenfalls verwendet man zur Einemulgierung derartiger hydrophober Verbindungen zusätzlich noch sogenannte Kupplerlösungsmittel oder Ölformer; das sind in der Regel höhersiedende organische Verbindungen, die die in den Silberhalogenidemulsionen zu emulgierenden, nicht-diffundierenden Farbkuppler und Entwicklungsinhibitor abspaltenden Verbindungen in Form öliger Tröpfchen einschließen. Verwiesen sei in diesem Zusammenhang beispielsweise auf die US-Patentschriften 2 322 027, 2 533 514, 3 689 271, 3 764 336 und 3 765 897.

Die erfindungsgemäß hergestellten Emulsionen können auf die üblichen Schichtträger aufgetragen werden, z. B. Träger aus Celluloseestern wie Celluloseacetat oder Celluloseacetobutyrat, ferner Polyester, insbesondere Polyäthylenterephthalat oder Polycarbonate, insbesondere auf Basis von Bis-phenylolpropan. Geeignet sind ferner Papierträger, die gegebenenfalls wasserundurchlässige Polyolefinschichten, z. B. aus Polyäthylen oder Polypropylen, enthalten können, ferner Träger aus Glas oder Metall.

Für eine Schwarzweißentwicklung sind die üblichen bekannten Schwarzweißentwicklerverbindungen geeignet, wie z. B. die Hydroxybenzole und 3-Pyrazolidone. Zur Erzeugung von Farbbildern können die üblichen Farbentwicklersubstanzen verwendet werden, z. B. N,N-Dimethyl-p-phenylendiamin, 4-Amino-3-methyl-N-äthyl-N-methoxyäthylanilin, 2-Amino-5-diäthylaminotoluol, N-Butyl-N-ω-sulfobutyl-p-phenylendiamin, 2-Amino-5-(N-äthyl-N-β-methansulfonamidäthyl-amino)-toluol, N-Äthyl-N-β-hydroxyäthyl-p-phenylendiamin, N,N-Bis-(β-hydroxyäthyl)-p-phenylendiamin, 2-Amino-5-(N-ethyl-N-β-hydroxyethyl-amino)-toluol. Weitere brauchbare Farbentwickler sind beispielsweise beschrieben in J. Amer. Chem. Soc. 73, 3100 (1951).

Bei der Herstellung von Silberhalogenidemulsionen nach dem Kaskadenverfahren liegen die wasserlöslichen Silbersalze im Vorratsbehälter $VB_1$ im allgemeinen in der Konzentration $c_1$ von 0,01 Mol bis 16,8 Mol pro Liter, insbesondere aber von 0,1 Mol bis 7 Mol pro Liter, vor; die Konzentration im Vorratsbehälter $VB_2$ liegt im allgemeinen zwischen 0,01 Mol und 16,8 Mol pro Liter, insbesondere zwischen 0,1 Mol und 7 Mol pro Liter.

Bei der Herstellung von Silberhalogenidemulsionen nach dem Kaskadenverfahren liegen die wasserlöslichen Halogenide im Vorratsbehälter $VB_1$ im allgemeinen in der Konzentration $c_1$ von 0,01 bis 7 Mol pro Liter, insbesondere aber von 0,1 Mol bis 5 Mol pro Liter, vor; die Konzentration im Vorratsbehälter $VB_2$ liegt im allgemeinen zwischen 0,01 Mol und 7 Mol pro Liter, insbesondere zwischen 0,1 Mol und 5 Mol pro Liter.

Entsprechende Werte werden für die beschriebene Ausführungsform II bevorzugt.

Die Einlaufgeschwindigkeit, die zweckmäßigerweise gewählt wird, hängt u. a. ab vom Ansatzvolumen, dem gewünschten Kristallhabitus, dem gewünschten mittleren Korndurchmesser und der gewünschten Korngrößenverteilung.

## Beispiele

In den folgenden Beispielen 1–9 werden folgende Abkürzungen mit der angegebenen Bedeutung verwendet:

$VB_{A1}$ = erster Vorratsbehälter für die Lösung A
$VB_{A2}$ = zweiter Vorratsbehälter für die Lösung A
$VB_{B1}$ = erster Vorratsbehälter für die Lösung B
$VB_{B2}$ = zweiter Vorratsbehälter für die Lösung B
$v_{A1}$ = auslaufendes Volumen aus $VB_{A1}$ (ml/min)
$v_{A2}$ = auslaufendes Volumen aus $VB_{A2}$ (ml/min)
$v_{B1}$ = auslaufendes Volumen aus $VB_{B1}$ (ml/min)
$v_{B2}$ = auslaufendes Volumen aus $VB_{B2}$ (ml/min)
$c_{A1}$ = Konzentration an Silbersalz in $VB_{A1}$ (Mol pro Liter)
$c_{A2}$ = Anfangskonzentration an Silbersalz in $VB_{A2}$ (Mol pro Liter)
$c_{B1}$ = Konzentration an Halogenid in $VB_{B1}$ (Mol pro Liter)
$c_{B2}$ = Anfangskonzentration an Halogenid in $VB_{B2}$ (Mol pro Liter)
Z = Zulauf gemäß Fig. 1

In den Beispielen 1–9 wird gemäß Ausführungsform I (Kaskade) gearbeitet.

## Beispiel 1

Eine Silberbromidemulsion wird nach dem Doppeleinlaufverfahren durch gleichzeitige Zugabe eines wasserlöslichen Halogenids und eines wasserlöslichen Silbersalzes in das Reaktionsgefäß

hergestellt. Der Einlauf des wasserlöslichen Silbersalzes erfolgt mit einer Kaskadenanordnung durch Hintereinanderschaltung von $VB_{A1}$ und $VB_{A2}$. Der gleichzeitige Zulauf der Halogenidlösung erfolgt nicht über eine Kaskadenanordnung, sondern wird bei pAg = 8 gemäß Fig. 1 über den Zulauf Z vorgenommen. Es wird dabei von folgenden Werten ausgegangen:

$v_{A1}$ = 150 ml/min
$v_{A2}$ = 200 ml/min
$c_{A1}$ = 0,2 Mol $AgNO_3$ pro Liter
$c_{A2}$ = 0,04 Mol $AgNO_3$ pro Liter

Die zugegebene Halogenidlösung hat eine Konzentration von 0,63 Mol pro Liter. Die Fällung im Reaktionsgefäß wird in folgenden Schritten durchgeführt:

1. Bei unterbrochenem Zulauf von $VB_{A1}$ zu $VB_{A2}$ werden nach dem Doppeleinlaufverfahren gleichzeitig Silbernitrat aus $VB_{A2}$ und die Kaliumbromidlösung in eine vorgelegte Gelatinelösung im Reaktionsgefäß gegeben.
2. Nach 5 Minuten wird der Zufluß von $VB_{A1}$ nach $VB_{A2}$ geöffnet, während gleichzeitig ein Rührer in $VB_{A2}$ für eine schnelle und gleichmäßige Vermischung sorgt.
3. Nach weiteren 40 Minuten wird der Zufluß von $VB_{A1}$ zu $VB_{A2}$ unterbrochen. Es werden noch 25 Minuten lang Silbernitrat aus $VB_{A2}$ und die angegebene Kaliumbromidlösung in die Vorlage gegeben.

Die erhaltenen Silberbromidkristalle waren kubisch und hatten eine mittlere Kantenlänge von 0,25 µm mit einer Abweichung von 8,5%. Es wurde also eine monodisperse Silberhalogenidemulsion erhalten.

Vergleichsweise wurden Silberbromidemulsionen gleicher Art gemäß der deutschen Offenlegungsschrift 2 107 118 hergestellt unter ansonsten gleichen Bedingungen. Dabei wurde festgestellt, daß bei dem bekannten Verfahren deutlich mehr Zeit für die einzelnen Phasen der Fällung aufgewendet werden muß. Bei dem bekannten Verfahren werden für die Keimbildungsphase, in der die Silberhalogenidkristalle bis auf eine Größe von maximal ca. 0,1 µm wachsen, etwa 100 bis 120 Minuten und für die restliche Fällungsphase bis auf 0,25 µm Kantenlänge weitere 110 bis 140 Minuten benötigt. Demgegenüber werden für das erfindungsgemäße Verfahren insgesamt nur 70 Minuten benötigt.

## Beispiel 2

Nach dem Doppeleinlaufverfahren wird mit einer Vorrichtung gemäß Fig. 1 eine reine Silberiodidemulsion gefällt. Die Silbernitratzugabe erfolgt ähnlich wie in Beispiel 1 über eine Kaskade gemäß Fig. 1, wobei folgende Größen eingehalten werden:

$v_{A1}$ = 20 ml/min
$v_{A2}$ = 35 ml/min
$c_{A1}$ = 4,25 Mol $AgNO_3$ pro Liter
$c_{A2}$ = 0,3 Mol $AgNO_3$ pro Liter

Im Reaktionsgefäß werden 4000 ml einer Gelatinelösung mit 0,6 g/Mol $AgNO_3$ eines Thioethers der folgenden Formel vorgelegt:

$$C_2H_5-S-C_2H_4-S-C_2H_4-NH-CO-NH_2$$

Das Iodid wird in Form einer 4molaren KJ-Lösung über den Zulauf Z zugegeben. Die Regelung der Iodidzugabe wird durch das Silberpotential $E_{Ag} = -120$ mV geregelt. Die Fällung wird in folgenden Stufen vorgenommen:

1. Bei geschlossener Zufuhr von $VB_{A1}$ nach $VB_{A2}$ werden zunächst 6 Minuten lang Silbernitratlösung aus $VB_{A2}$ und die angegebene KJ-Lösung in das Reaktionsgefäß eingelassen.
2. Anschließend wird die Zufuhr von $VB_{A1}$ nach $VB_{A2}$ geöffnet, wobei ein Rührer in $VB_{A2}$ für eine schnelle und gleichmäßige Vermischung sorgt.
3. Nach 40 Minuten wird der Zufluß von $VB_{A1}$ nach $VB_{A2}$ wieder geschlossen und noch 34 Minuten lang weiter Silberiodid gefällt durch gleichzeitige Zugabe von KJ und $AgNO_3$ aus $VB_{A2}$.

Es werden Silberiodidkristalle mit einer Kantenlänge von 0,6 µm erhalten. Die erhaltene Emulsion ist monodispers mit einer mittleren Abweichung vom mittleren Korndurchmesser von 7,35%.

Wiederum bringt das erfindungsgemäße Verfahren eine deutliche zeitliche Einsparung gegenüber dem aus der deutschen Offenlegungsschrift 2 107 118 bekannten Verfahren zur Herstellung von

Silberhalogenidemulsionen. Während erfindungsgemäß insgesamt 80 Minuten lang gefällt wird, sind dafür nach den bekannten Verfahren mindestens 170 Minuten erforderlich.

## Beispiel 3

Im folgenden wird gezeigt, daß auch die Halogenidzugabe über eine Kaskade gemäß Fig. 1 erfolgen kann. Weiterhin weisen die gemäß diesem Beispiel gefällten Kristalle einen nach außen abnehmenden Konzentrationsgradienten an Silberiodid auf. Hierzu werden im Reaktionsgefäß vorgelegt:

7500 ml einer 0,002molaren $NH_4Br$-Lösung
7500 ml einer 0,14molaren NaCl-Lösung
1,4 g des im Beispiel 1 angegebenen Thioethers

Silbernitrat wird in Form einer 0,5molaren wäßrigen Silbernitratlösung über den Zulauf Z zugegeben. Die Zugabe an Silbernitrat wird über den pAg-Wert gesteuert, wobei ein pAg-Wert entsprechend einem Silber-Potential $E_{Ag} = -20$ bis $-40$ mV eingehalten wird.

Für den Kaskadeneinlauf des Halogenids gelten folgende Versuchsbedingungen:

$v_{B1}$ = 555 ml/min
$v_{B2}$ = 490 ml/min
$c_{B1}$ = 1,04 Mol $NH_4Br$ pro Liter (kein Jodid in $VB_{B1}$)
$c_{B2}$ = 0,18 Mol KJ pro Liter (kein Bromid in $VB_{B2}$)

Die Fällung wird in folgenden Schritten vorgenommen:

1. Bei unterbrochenem Zufluß von $VB_{B1}$ zu $VB_{B2}$ wird aus $VB_{B2}$ die KJ-Lösung zusammen mit der Silbernitratlösung in das Reaktionsgefäß einlaufen gelassen. Diese Zugabe erfolgt 3 Minuten lang.
2. Nach 3 Minuten wird der Zufluß von $VB_{B1}$ nach $VB_{B2}$ geöffnet, wobei ein Rührer in $VB_{B2}$ für eine schnelle Durchmischung sorgt. Mit dieser Anordnung wird 6 Minuten lang weitergefällt.
3. Danach wird die Zufuhr von $VB_{B1}$ nach $VB_{B2}$ wieder geschlossen und es wird noch 1 Minute lang weitergefällt.
4. Anschließend wird 20 Minuten lang bei 70° C digeriert.
5. Anschließend wird ohne Verwendung einer Kaskade 20 Minuten lang nach dem Doppeleinlaufverfahren weiteres Silberbromid aufgefällt unter Verwendung einer 0,5molaren $AgNO_3$- und einer 0,5molaren Bromidlösung.

Man erhält eine relativ einheitliche Emulsion mit abgerundeten Kristallen, die einen mittleren Korndurchmesser von 0,4 µm haben.

## Beispiel 4

Es wird eine Silberchloridemulsion in zwei Kaskadeneinlaufschritten nach dem Doppeleinlaufverfahren gemäß Fig. 1 hergestellt. Die Einlaufskaskade wird jeweils für die Silbernitratlösung eingerichtet. Die Zugabe des Halogenids erfolgt über den Zulauf Z. Vor Beginn der Fällung werden im Reaktionsgefäß 3200 ml einer Gelatinelösung mit 0,6 g/Mol $AgNO_3$ des in Beispiel 5 angegebenen Thioethers vorgelegt. Der Doppeleinlauf erfolgt in den ersten drei Verfahrensschritten mit einer 0,74molaren NaCl-Lösung, in den weiteren Verfahrensschritten mit einer 1,13molaren NaCl-Lösung. Für die ersten drei Verfahrensschritte gelten folgende Angaben zur Kaskade:

$v_{A1}$ = 38 ml/min
$v_{A2}$ = 67 ml/min
$c_{A1}$ = 1,1 Mol $AgNO_3$ pro Liter
$c_{A2}$ = 0,12 Mol $AgNO_3$ pro Liter

Die Fällung wurde in folgenden Verfahrensschritten durchgeführt:

1. Bei geschlossener Zufuhr von $VB_{A1}$ nach $VB_{A2}$ werden zunächst 2 Minuten lang Silbernitrat aus $VB_{A2}$ zusammen mit der Natriumchloridlösung in das Reaktionsgefäß bei 70°C und einem pAg-Wert von 80 mV eingelassen.
2. Anschließend der Zulauf von $VB_{A1}$ nach $VB_{A2}$ geöffnet und mit dieser Anordnung 26 Minuten lang weitergefällt.

3. Anschließend wird der Zufluß von $VB_{A1}$ nach $VB_{A2}$ geschlossen und es wird noch 17 weitere Minuten gefällt durch Zugabe von Halogenid und von Silbernitrat aus $VB_{A2}$.

Anschließend wird mit folgenden Lösungen mit einem zweiten Kaskadeneinlauf weitergefällt, wobei für die zweite Kaskade folgende Werte gelten:

$v_{A1}$ = 150 ml/min
$v_{A2}$ = 188 ml/min
$c_{A1}$ = 1,46 Mol $AgNO_3$ pro Liter
$c_{A2}$ = 0,29 Mol $AgNO_3$ pro Liter

Mit dieser Kaskade werden folgende Verfahrensschritte durchgeführt:

4. Bei geschlossener Zufuhr von $VB_{A1}$ nach $VB_{A2}$ werden 2 Minuten lang Silbernitrat aus $VB_{A2}$ und die angegebene 1,13molare Natriumchloridlösung in das Reaktionsgefäß gegeben.
5. Anschließend wird der Zulauf von $VB_{A1}$ nach $VB_{A2}$ geöffnet und weiteres Silberhalogenid wird 30 Minuten lang gefällt durch Zugabe des sich in $VB_{A2}$ ergebenden Gemisches und der Halogenidlösung in das Reaktionsgefäß.
6. Anschließend wird der Zufluß von $VB_{A1}$ nach $VB_{A2}$ unterbrochen und es wird noch 8 Minuten lang Silberhalogenid gefällt durch Zugabe des sich in $VB_{A2}$ befindlichen Gemisches und der 1,13molaren Natriumchloridlösung.

Man erhält eine kubische, monodisperse Silberchloridemulsion mit einer mittleren Kantenlänge von 2,2 µm und einer Abweichung vom mittleren Korndurchmesser von 7,3%. Bei Verwendung des aus der deutschen Offenlegungsschrift 2 107 118 bekannten Verfahrens wären zur Herstellung dieser Silberchloridkristalle ca. 145 Minuten erforderlich gewesen.

Beispiel 5

Nach dem Doppeleinlaufverfahren gemäß Fig. 1 wird eine Silberbromidemulsion in Gegenwart eines Thioethers hergestellt. Hierzu werden im Reaktionsgefäß 6 g folgenden Thioethers vorgelegt:

$C_2H_5-S-C_2H_4-S-C_2H_4-NH-CO-C_2H_4-COOH$

Kaliumbromid wird pAg-gesteuert bei einem pAg-Wert von 9 in Form einer 2molaren KBr-Lösung über den Zulauf Z zugegeben. Das Silbernitrat wird mit einer Kaskade mit folgenden Daten zugegeben:

$v_{A1}$ = 56 ml/min
$v_{A2}$ = 94 ml/min
$c_{A1}$ = 2,26 Mol $AgNO_3$ pro Liter
$c_{A2}$ = 0,63 Mol $AgNO_3$ pro Liter

Die Fällung erfolgt in folgenden Schritten:

1. Bei geschlossener Zufuhr von $VB_{A1}$ nach $VB_{A2}$ werden 2 Minuten lang Silbernitratlösung aus $VB_{A2}$ und KBr gleichzeitig in das Reaktionsgefäß einlaufen gelassen.
2. Anschließend wird der Zufluß von $VB_{A1}$ nach $VB_{A2}$ geöffnet. Ein Rührer sorgt in $VB_{A2}$ für eine schnelle Durchmischung.
3. Nach 18 Minuten wird der Zufluß von $VB_{A1}$ nach $VB_{A2}$ wieder geschlossen. Es wird noch 12 Minuten lang Silberbromid gefällt durch Zufluß der Bromidlösung und der Silbernitratlösung aus $VB_{A2}$.

Es wird eine monodisperse, oktaedrische Silberbromidemulsion mit einer mittleren Kantenlänge von 0,8 µm und einer mittleren Abweichung vom Korndurchmesser von 6,0% erhalten. Bei Verwendung des aus der deutschen Offenlegungsschrift 2 107 118 bekannten Verfahrens wären zur Herstellung dieser Emulsion 85 Minuten erforderlich gewesen.

Beispiel 6

Es wird die gleiche Versuchsanordnung wie in Beispiel 5 verwendet, nur werden anstelle des Thioethers 135 g Imidazol bei pH 6 vorgelegt. Die Zugabe des Silbernitrats erfolgt wieder über die Kaskade, die Zugabe des Halogenids über den Zulauf Z. Die Fällung wird in folgenden Schritten vorgenommen:

1. Bei unterbrochenem Zufluß von $VB_{A1}$ nach $VB_{A2}$ wird 3 Minuten lang bei pAg 8,8 Silberbromid gefällt.
2. Anschließend wird der Zufluß von $VB_{A1}$ nach $VB_{A2}$ 40 Minuten lang geöffnet und im Reaktionsgefäß wird bei pAg 6,8 weitergefällt.
3. Anschließend wird der Zufluß von $VB_{A1}$ nach $VB_{A2}$ wieder geschlossen. Anschließend wird noch 7 Minuten lang weitergefällt durch Zugabe aus $VB_{A2}$ und der Halogenidlösung.

Man erhält eine monodisperse, oktaedrische Emulsion mit einer Kantenlänge von 1,4 µm und einer mittleren Abweichung vom Korndurchmesser von 7,3%. Bei Verwendung des aus der deutschen Offenlegungsschrift 2 107 118 bekannten Verfahrens wären zur Herstellung entsprechender Emulsionen insgesamt 205 Minuten erforderlich gewesen.

## Beispiel 7

Nach dem Doppeleinlaufverfahren gemäß Fig. 1 wird eine Silberbromidemulsion hergestellt. Dabei wird Kaliumbromid pAg-gesteuert bei einem pAg-Wert von 9 in Form einer 2molaren KBr-Lösung über den Zulauf Z zugegeben. Das Silbernitrat wird mit einer Kaskade mit folgenden Daten zugegeben:

$v_{A1}$ = 14 ml/min
$v_{A2}$ = 60 ml/min
$c_{A1}$ = 5,9 Mol $AgNO_3$ pro Liter
$c_{A2}$ = 0,1 Mol $AgNO_3$ pro Liter

Die Fällung erfolgt in folgenden Schritten:

1. Bei geschlossener Zufuhr von $VB_{A1}$ nach $VB_{A2}$ werden 3 Minuten lang Silbernitratlösung aus $VB_{A2}$ und KBr gleichzeitig in das Reaktionsgefäß einlaufen gelassen.
2. Anschließend wird der Zufluß von $VB_{A1}$ nach $VB_{A2}$ geöffnet. Ein Rührer sorgt in $VB_{A2}$ für eine schnelle Durchmischung. Gleichzeitig wird weiter Silberbromid gefällt durch Zufluß aus $VB_{B2}$ und durch Zufluß der KBr-Lösung in das Reaktionsgefäß.
3. Nach 40 Minuten wird der Zufluß von $VB_{A1}$ nach $VB_{A2}$ wieder geschlossen. Es wird noch 7 Minuten lang Silberbromid gefällt durch Zufluß der Bromidlösung und der Silbernitratlösung aus $VB_{A2}$.

Es wird eine monodisperse, oktaedrische Silberbromidemulsion mit einer mittleren Kantenlänge von 0,8 µm und einer mittleren Abweichung vom Korndurchmesser von 6,0% erhalten. Bei Verwendung des aus der deutschen Offenlegungsschrift 2 107 118 bekannten Verfahrens wären zur Herstellung dieser Emulsion 125 Minuten erforderlich gewesen.

## Beispiel 8

Eine gemäß Beispiel 3 erhaltene Emulsion wird durch Zusatz von Polystyrolsulfonsäure und Herabsetzen des pH mit Mineralsäure auf 3,0 geflockt, dekantiert und gewaschen, um die überschüssigen wasserlöslichen Salze herauszulösen. Anschließend wird bei pH 7,0 redispergiert, die erforderliche Gelatinemenge hinzugefügt, mit Natriumthiosulfat und Goldchlorid versehen und bei einer Temperatur zwischen 50° und 60° C bei einem pH-Wert zwischen 5,5 und 6,5 und einem pAg von 8,6 bis 9,2 auf maximale Empfindlichkeit gereift.

Die Emulsion wird gießfertig gemacht, indem pro kg 20 ml einer 1%igen methanolischen Lösung von 4-Hydroxy-6-methyl-1,3,3a,7-tetraazainden, 10 ml einer 10%igen Formalinlösung und 10 ml einer 5%igen wäßrigen Saponinlösung als Netzmittel hinzugefügt werden. Die Emulsion wird auf einen Celluloseazetatträger vergossen, die Filmprobe hinter einem Graukeil belichtet und 7 Minuten bzw. 16 Minuten in einem Entwickler der Zusammensetzung

| | |
|---|---|
| Natriumsulfit sicc. | 70,0 g |
| Borax | 7,0 g |
| Hydrochinon | 3,5 g |
| p-Monomethylaminophenol-Sulfat | 3,5 g |
| Natriumcitrat | 7,0 g |
| Kaliumbromid | 0,4 g |
| mit Wasser auf 1 Liter auffüllen | |

entwickelt.

Es werden die aus Fig. 3 ersichtlichen Gradationskurven nach sensitometrischer Anwendung erhalten (Kurve a nach 7 Minuten, Kurve b nach 16 Minuten Entwicklung).

Beispiel 9

Wie in Beispiel 3 angegeben wird eine Emulsion hergestellt mit der Änderung, daß der in Beispiel 3 angegebene Fällungsschritt 5.) ersetzt wird durch folgende Verfahrensweise:

Im Anschluß an die bei unter 4.) angegebene 20minütige Digestion bei 70°C wird in Kaskadenanordnung auf der Halogenidseite 20 Minuten lang nach dem Doppeleinlaufverfahren weiteres Silberbromid aufgefällt unter Verwendung einer 0,5molaren $AgNO_3$- und einer 0,5molaren Bromidlösung. 5 Minuten nach Beginn des Einlaufs läßt man in die Bromidlösung innerhalb von 15 Minuten 1,8 l $H_2O$, in welchem 0,5 g KI gelöst sind, zulaufen. Man erhält eine relativ einheitliche Emulsion mit abgerundeten Kristallen, die einen mittleren Korndurchmesser von 0,4 µm haben.

Die Emulsion wird wie in Beispiel 8 angegeben weiterverarbeitet.

Es werden die aus Fig. 4 ersichtlichen Gradationskurven erhalten (Kurve a nach 7 Minuten, Kurve b nach 16 Minuten Entwicklung).

Beispiel 8 und 9 zeigen wie in einfacher Weise erfindungsgemäß Emulsionen mit unterschiedlichsten Eigenschaften erhalten werden können.

Beispiel 10

Es wird gemäß Fig. 5 eine Chlorbromsilberemulsion gefällt. Vorgelegt wird eine Lösung mit 800 ml einer Gelatinelösung mit 200 mg/Mol $AgNO_3$ des Thioethers wie in Beispiel 3 beschrieben.

Sowohl für die Halogenid- als auch für die Silbernitratseite werden zwei Einlaufgefäße gemäß Fig. 5 verwendet:

$VB'_{B1}$ und $VB'_{B2}$ für die Halogenidlösung und
$VB'_{A1}$ und $VB'_{A2}$ für die Silbernitratlösung.

Folgende Lösungen werden in die Gefäße gefüllt:

$VB'_{A1}$ = 0,376 Mol $AgNO_3$/l
$VB'_{A2}$ = 6,68 Mol $AgNO_3$/l
$VB'_{B1}$ = 0,41 Mol KBr/l
0,26 Mol NaCl/l
$VB'_{B2}$ = 5,12 Mol KBr/l
3,25 Mol NaCl/l

Die vorgelegte Lösung wie die Reaktionslösungen haben eine Temperatur von 70° C.
Die Lösungen aus $VB'_{A1}$ und $VB'_{A2}$ fließen in eine Regelvorrichtung R gemäß Fig. 5.
Die Lösungen aus $VB'_{B1}$ und $VB'_{B2}$ fließen in eine andere Regelvorrichtung R gemäß Fig. 5.
Aus diesen Regelvorrichtungen fließen

a) der Gesamtvolumenstrom $v'_{gA}$, enthaltend $AgNO_3$
b) der Gesamtvolumenstrom $v'_{gB}$, enthaltend die Halogenide

in das Reaktionsgefäß.

Die beiden Regelvorrichtungen, in denen sich die Lösungen aus den beiden Vorratsgefäßen für je eine Seite vereinigen, werden gleichzeitig synchron derart gesteuert, daß innerhalb der Zeit von 50 Minuten exponentiell die Zuflußöffnung der niedrigen konzentrierten Lösung von 100% auf 0% verringert und umgekehrt die zufließende Menge der konzentrierten Lösung von 0% auf 100% vergrößert wird.

Es werden Silberbromidchloridkristalle erhalten mit einem mittleren Durchmesser von 0,8 µm mit einer mittleren Abweichung von 7%.

**Patentansprüche**

1. Verfahren zur Bildung von wenigstens einem schwerlöslichen Metallsalz in einem Reaktionsgefäß durch Vermischen wenigstens einer Lösung A, die wenigstens ein Kation des Metallsalzes enthält, mit wenigstens einer Lösung B, die wenigstens ein Anion des Metallsalzes enthält, durch Zulauf wenigstens einer dieser Lösungen in ein Reaktionsgefäß, dadurch gekennzeichnet, daß wenigstens eine Zeitlang der Zulauf dieser Lösung so erfolgt, daß sich die Konzentration der zulaufenden Lösung kontinuierlich ändert.

2. Verfahren nach Anspruch 1, dadurch gekennzeichnet, daß sich die Konzentration der zulaufenden Lösung kontinuierlich erhöht.

3. Verfahren nach Anspruch 2, dadurch gekennzeichnet, daß die Konzentration der zulaufenden Lösung zum Abschluß der Fällung kontinuierlich verringert wird.

4. Verfahren nach Anspruch 1, dadurch gekennzeichnet, daß aus wenigstens zwei Vorratsbehältern, in denen entweder Anionen oder Kationen des auszufällenden Metallsalzes in unterschiedlichen Konzentrationen enthalten sind, die Volumenströme $v'_1$ und $v'_2$ in eine Regelvorrichtung und aus dieser mit dem Gesamtvolumenstrom $v'_g$ in das Reaktionsgefäß fließen.

5. Verfahren nach Anspruch 1, dadurch gekennzeichnet, daß aus einem ersten Vorratsbehälter, der wenigstens eines der im Reaktionsgefäß auszufällenden Kationen oder Anionen in einer Lösung der Konzentration $c_1$ enthält, die Lösung mit der Konzentration $c_1$ in einen zweiten Vorratsbehälter läuft, der das betreffende Ion in einer Lösung der Konzentration $c_2$ enthält, die von $c_1$ verschieden ist, und daß erst aus diesem zweiten Vorratsbehälter der Zulauf der Lösung in das Reaktionsgefäß erfolgt, wobei $c_1$ oder $c_2$ gleich Null sein können.

6. Verfahren nach Anspruch 1, dadurch gekennzeichnet, daß das zu bildende Metallsalz ein Silberhalogenid ist, Lösung A die wäßrige Lösung eines Silbersalzes ist, das in Wasser leichter löslich ist als das zu bildende Salz, und daß Lösung B die Lösung eines in Wasser leichtlöslichen Halogenids ist.

7. Verfahren nach Anspruch 1, dadurch gekennzeichnet, daß der Zulauf in das Reaktionsgefäß mit im wesentlichen konstanter Volumengeschwindigkeit erfolgt.

8. Verfahren nach Anspruch 1, dadurch gekennzeichnet, daß die Lösungen A und B gleichzeitig in das Reaktionsgefäß einlaufen und daß die Bildung des Salzes in Gegenwart eines Peptisationsmittels erfolgt.

9. Photographisches Material aus einem Schichtträger und wenigstens einer darauf aufgetragenen lichtempfindlichen Silberhalogenidemulsionsschicht und gegebenenfalls weiteren Schichten, dadurch gekennzeichnet, daß wenigstens eine Emulsion eines gemäß Anspruch 1 hergestellten Silberhalogenidsalzes enthalten ist.

10. Verfahren zur Herstellung photographischer Bilder durch bildmäßige Belichtung und Entwicklung eines photographischen Materials nach Anspruch 9.

**Claims**

1. Process for forming at least one sparingly soluble metal salt in a reaction vessel by mixing at least one solution A, which contains at least one cation of the metal salt, with at least one solution B, which contains at least one anion of the metal salt, by running at least one of these solutions into a reaction vessel, characterised in that this solution is run in for at least part of the process in such a way that the concentration of the inflowing solution continuously changes.

2. Process according to claim 1, characterised in that the concentration of the inflowing solution continuously increases.

3. Process according to claim 2, characterised in that the concentration of the inflowing solution is decreased continuously towards the end of the precipitation.

4. Process according to claim 1, characterised in that from at least two supply vessels, in which either anions or cations of the metal salt to be precipitated are contained and in varying concentrations, solutions with flow rates $v'_1$ and $v'_2$ flow into a regulating device and out of the same with a total flow rate of $v'_g$ into the reaction vessel.

5. Process according to claim 1, characterised in that from a first supply vessel, which contains in a solution having a concentration $c_1$ at least one of the cations or anions to be precipitated in the reaction vessel, the solution of the concentration $c_1$ flows into a second supply vessel, which contains the ion concerned in a solution of the concentration $c_2$, which is different from $c_1$, and in that it is only from this second supply vessel that the solution is run into the reaction vessel, $c_1$ or $c_2$ being able to be zero.

6. Process according to claim 1, characterised in that the metal salt to be formed is a silver halide, solution A is an aqueous solution of a silver salt, which is more soluble in water than the salt to be formed, and solution B is a solution of a halide readily soluble in water.

7. Process according to claim 1, characterised in that the reaction vessel is fed at a substantially constant flow rate.

8. Process according to claim 1, characterised in that solutions A and B flow simultaneously into the reaction vessel and the formation of the salt takes place in the presence of a peptizing agent.

9. A photographic material consisting of a support layer and, applied thereto, at least one photosensitive silver halide emulsion layer and, optionally, further layers, characterised in that it contains at least one emulsion of a silver halide salt produced in accordance with claim 1.

10. A process for the production of photographic images by exposing and developing the photographic material according to claim 9.

**Revendications**

1. Procédé en vue de former au moins un sel métallique difficilement soluble dans un récipient réactionnel en mélangeant au moins une solution A contenant au moins un cation du sel métallique,

avec au moins une solution B contenant au moins un anion du sel métallique, par l'admission d'au moins une de ces solutions dans un récipient réactionnel, caractérisé en ce que, au moins pendant un certain temps, l'admission de cette solution a lieu de telle sorte que la concentration de la solution ainsi acheminée change continuellement.

2. Procédé suivant la revendication 1, caractérisé en ce que la concentration de la solution acheminée augmente continuellement.

3. Procédé suivant la revendication 2, caractérisé en ce que la concentration de la solution acheminée est réduite continuellement jusqu'au terme de la précipitation.

4. Procédé suivant la revendication 1, caractérisé en ce que, d'au moins deux réservoirs dans lesquels sont contenus des anions ou des cations du sel métallique à précipiter dans des concentrations différentes, les courants volumétriques $v'_1$ et $v'_2$ s'écoulent dans un dispositif de réglage, pour s'écouler ensuite, de ce dernier, dans le récipient réactionnel en un courant volumétrique global $v'_g$.

5. Procédé suivant la revendication 1, caractérisé en ce que, d'un premier réservoir qui contient au moins un des cations ou des anions à précipiter dans le récipient réactionnel en une solution de la concentration $c_1$, cette solution de la concentration $c_1$ s'écoule dans un deuxième réservoir contenant l'ion concerné en une solution de la concentration $c_2$ qui est différente de la concentration $c_1$, l'admission de la solution dans le récipient réactionnel ayant lieu uniquement à partir de ce deuxième réservoir, la concentration $c_1$ ou $c_2$ pouvant être égale à zéro.

6. Procédé suivant la revendication 1, caractérisé en ce que le sel métallique à former est un halogénure d'argent, la solution A est une solution aqueuse d'un sel d'argent qui se dissout plus aisément dans l'eau que le sel à former, tandis que la solution B est une solution d'un halogénure aisément soluble dans l'eau.

7. Procédé suivant la revendication 1, caractérisé en ce que l'admission dans le récipient réactionnel a lieu à une vitesse volumétrique essentiellement constante.

8. Procédé suivant la revendication 1, caractérisé en ce que les solutions A et B pénètrent simultanément dans le récipient réactionnel, tandis que la formation du sel a lieu en présence d'un agent de peptisation.

9. Elément photographique constitué d'un support de couches et d'au moins une couche d'émulsion photosensible à l'halogénure d'argent appliquée sur ce support, ainsi qu'éventuellement d'autres couches, caractérisé en ce qu'il contient au moins une émulsion d'un halogénure d'argent préparé suivant la revendication 1.

10. Procédé pour la formation d'images photographiques en soumettant un élément photographique suivant la revendication 9 à une exposition et un développement sous forme d'une image.

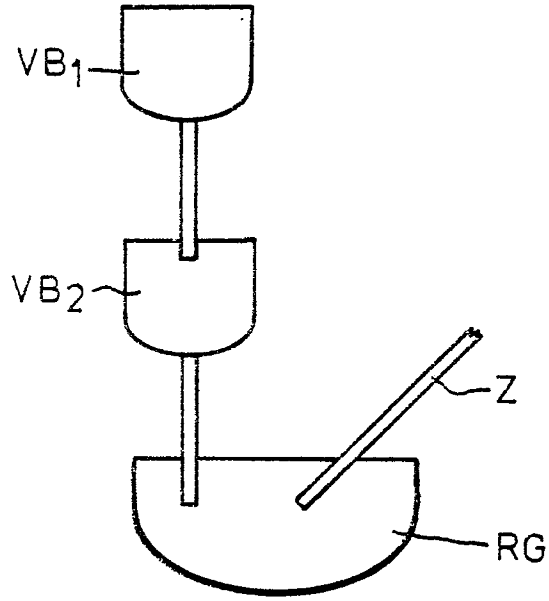


FIG.1

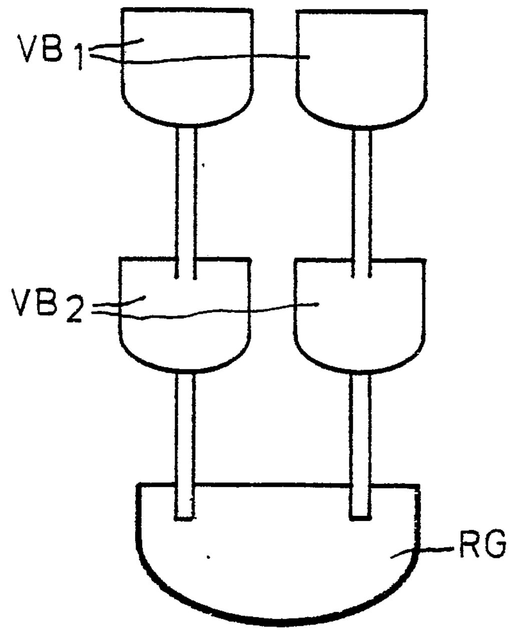


FIG. 2

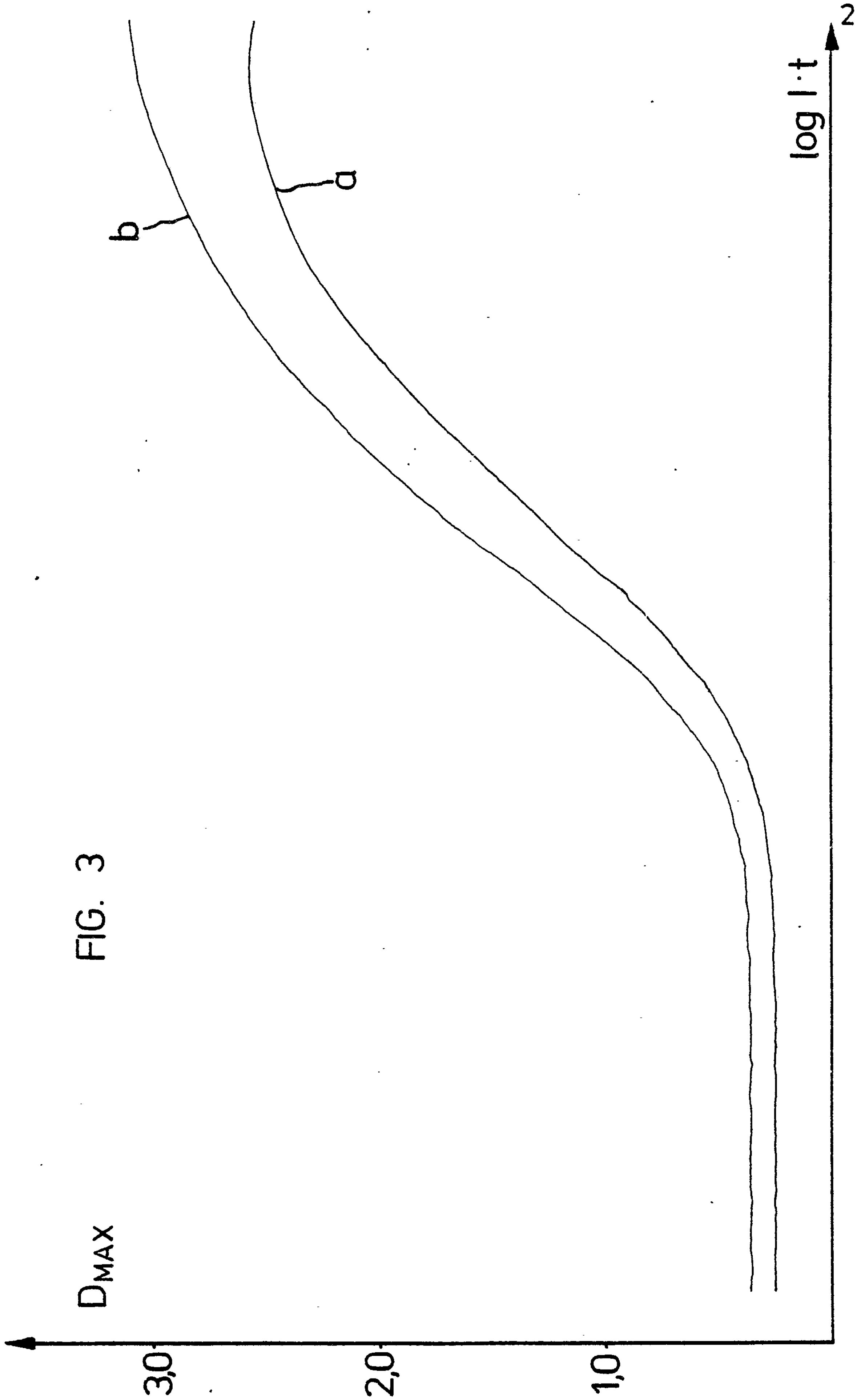


FIG. 3

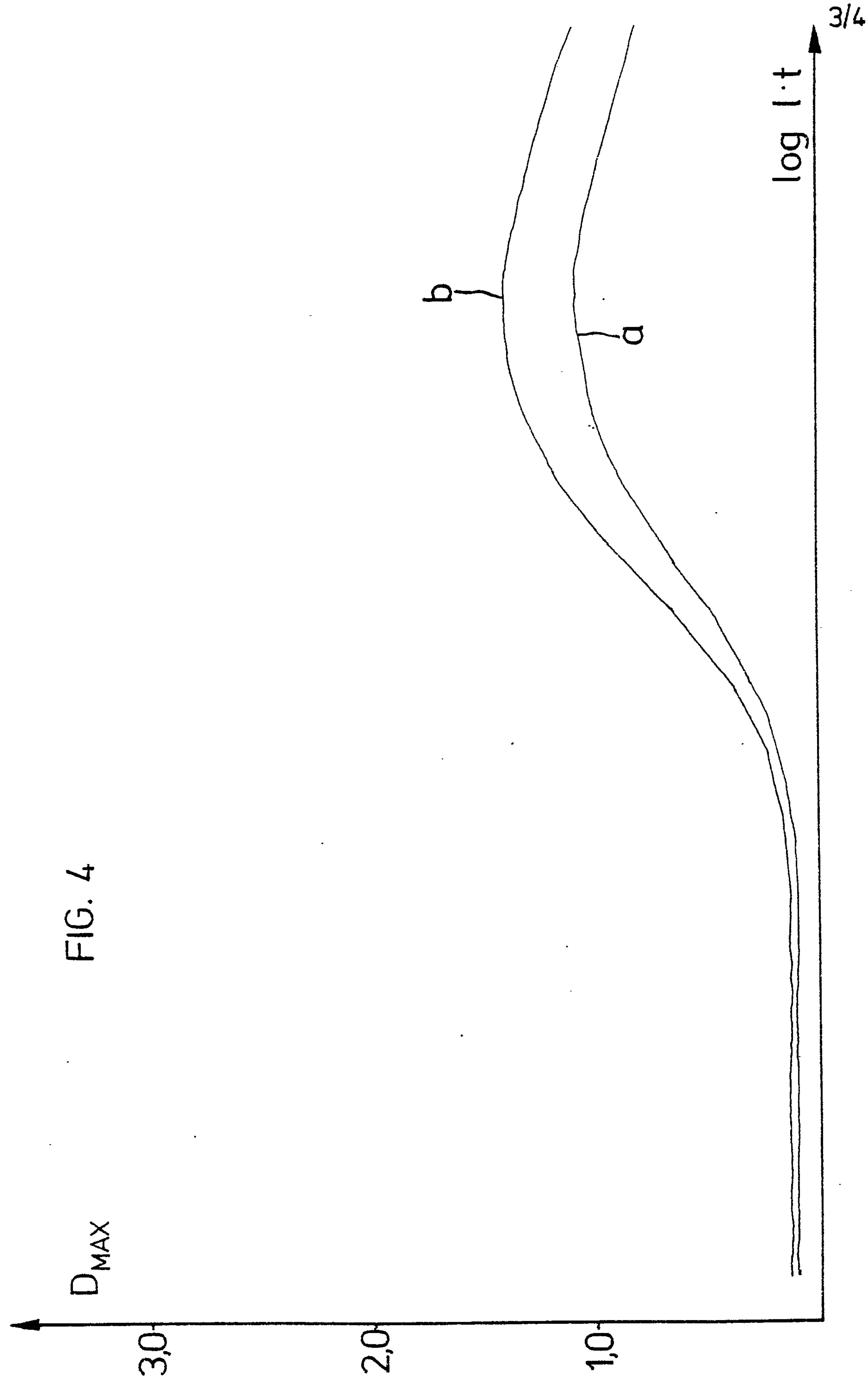


FIG. 4

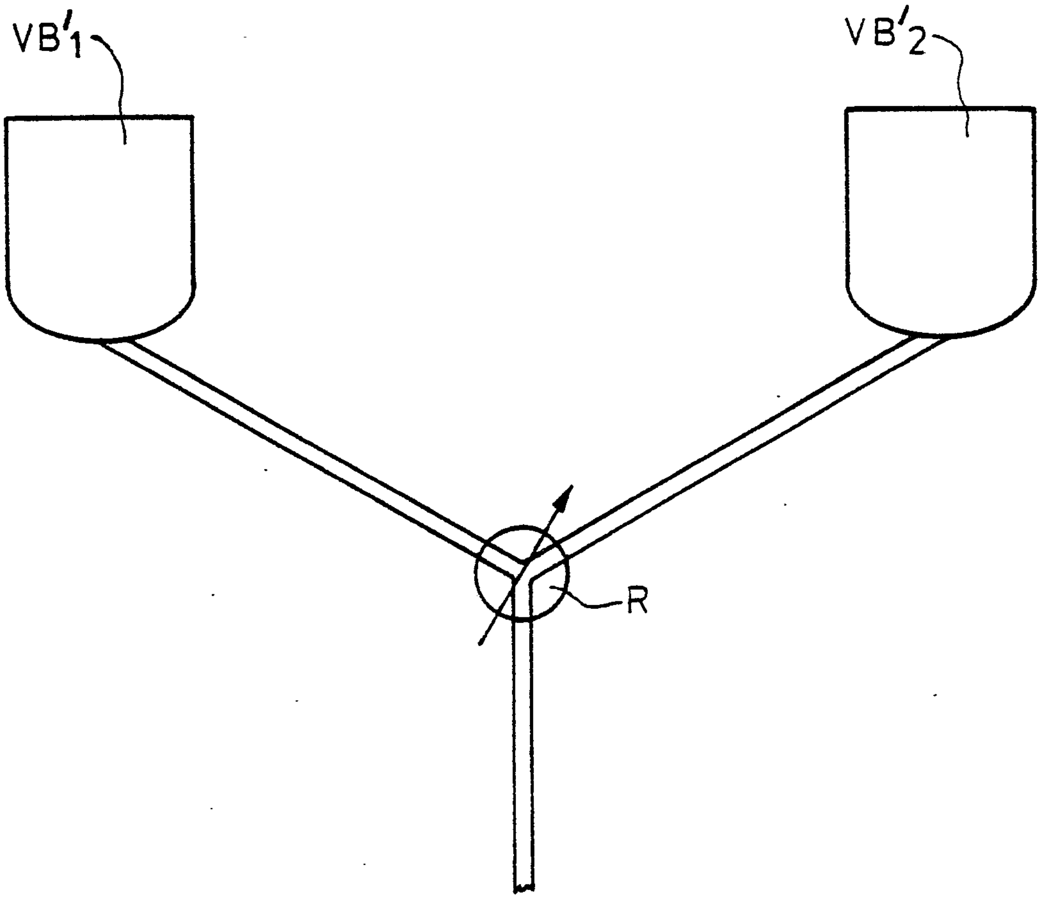


FIG. 5